# EUROPÄISCHE PATENTANMELDUNG

(11) **EP 4 494 445 A1**
(43) Veröffentlichungstag der Anmeldung: **22.01.2025**
(21) Anmeldenummer: 24177394.4
(22) Anmeldetag: 22.05.2024
(51) Int. Cl.: A01D 67/00, B62D 21/16, A01D 41/14, A01D 69/03

(54) **ERNTEBERGUNGSVORRICHTUNG MIT INTEGRIERTEM HYDRAULIKTANK**

(30) Priorität: 16.06.2023 DE 102023115865
(71) Anmelder: Carl Geringhoff GmbH & Co. Kommanditgesellschaft, 59227 Ahlen (DE)
(72) Erfinder: Sälker, Dominik, 48151 Münster (DE); Webermann, Dirk, 48308 Senden (DE); Sudhues, Steffen, 59227 Ahlen (DE); Pokriefke, Michael, 27798 Hude (DE)
(74) Vertreter: Weeg, Thomas

(57) **Zusammenfassung**

Die vorliegende Erfindung bezieht sich auf einen Vorratstank für Hydrauliköl, der in einem hohlen Rahmenprofil eines Rahmens für eine Erntebergungsvorrichtung angeordnet ist.

## Beschreibung

Die vorliegende Erfindung bezieht sich auf eine Erntebergungsvorrichtung nach dem Oberbegriff des Anspruchs 1.

Gattungsgemäße Erntebergungsvorrichtungen wie Getreideschneidwerke, Maispflücker, Pickup-Vorrichtungen und dergleichen sind in vielfältigen Ausgestaltungen vorbekannt. Derartige Erntebergungsvorrichtungen verfügen häufig über hydraulische Antriebe für die verschiedenen Maschinenfunktionen, die häufig auch über hydraulische Ventile ein- und ausgeschaltet und auf gewünschte Betriebsparameter eingestellt werden. Die entsprechenden Hydrauliksysteme können an den Hydraulikkreislauf der zugehörigen landwirtschaftlichen Erntemaschine angeschlossen sein, sie können aber auch über ein eigenes Hydrauliksystem verfügen. Um den Erntebergungsvorsatz immer unter allen Betriebsbedingungen mit einer ausreichenden Menge an Hydrauliköl versorgen zu können, werden die Erntebergungsvorrichtungen zunehmend mit eigenen Tanks zur Bevorratung mit ausreichenden Mengen an Hydraulikflüssigkeit ausgestattet. Ein Beispiel für einen solchen Tank ist in der Schrift DE 20 2006 020 018 U1 offenbart. Derartige Tanks sind allerdings teuer und beanspruchen einen Bauraum, der häufig nicht ohne eine Inkaufnahme funktionaler Nachteile zur Verfügung steht.

Für Traktoren ist es bekannt, Rahmenteile als Hydrauliktank auszubilden. So offenbart beispielsweise die Schrift DE 90 11 297.0, den Überrollbügel eines Traktors als Hydrauliktank zu nutzen, wobei das Querrohr als Ausgleichsgefäß dient. Über die große Bauhöhe des Überrollbügels und den Ausgleich des Pegelstands in den beiden senkrechten Stützrohren über das Querrohr befindet sich immer ausreichend Hydraulikflüssigkeit in den Stützrohren, um ein Trockenfallen des Ölablaufs zu vermeiden.

Aus der Schrift DE 203 09 312 U1 ist es bekannt, den Fahrzeugrahmen eines Rasentraktors aus öldichten Hohlprofilen zu bilden, die mit Hydrauliköl gefüllt sind und einen Vorratsbehälter für das Hydrauliköl bilden. Der Fahrzeugrahmen ist dann an mindestens einer Stelle nach oben gezogen, um ein Luftpolster für das Hydrauliköl auszubilden. Die in einem Rasentraktor benötigten Hydraulikölmengen sind allerdings sehr gering. Der Fahrzeugrahmen weist außerdem eine vergleichsweise große Bauhöhe auf, über die Mengenschwankungen im Tank und unterschiedliche Querneigungen des Rasentraktors leicht ausgeglichen werden können, ohne dass Gefahr droht, dass der Ölablauf trockenfällt.

Da Erntebergungsvorrichtungen üblicherweise sehr flach bauen, damit die Fahrer der Erntemaschinen das Erntegeschehen gut überwachen können, erscheint die Idee, ein Rahmenteil eines Schneidwerks als Hydrauliktank zu verwenden, abwegig.

Es ist die Aufgabe der vorliegenden Erfindung, in einer Erntebergungsmaschine einen Tank für Hydrauliköl anzuordnen, der kostengünstig zu realisieren ist und wenig Bauraum beansprucht. Der Tank soll zudem so ausgebildet sein, dass die vorstehend beschriebenen Nachteile vermieden werden.

Die Aufgabe wird für eine gattungsgemäße Erntebergungsvorrichtung durch die kennzeichnenden Merkmale des Anspruchs 1 gelöst.

Wenn der Vorratstank in dem innen hohl ausgebildeten Strukturelement des Rahmens als fluiddicht ausgestalteter Vorratstank zur Bevorratung der für den Betrieb der Hydraulikkomponenten benötigten Flüssigkeit ausgestaltet ist, kann auf den Einbau eines gesonderten Tanks verzichtet werden. Dadurch verringert sich der Bauaufwand für die Erntebergungsvorrichtung, und es wird kein zusätzlicher Bauraum für einen Tank benötigt. Das Risiko von Beschädigungen des Tanks durch Anfahrschäden ist verringert. Da Strukturelemente des Rahmens üblicherweise sehr robust mit vergleichsweise dicken Wandstärken der verwendeten Metallprofile ausgebildet sind, ist bei dieser Bevorratung des Hydrauliköls auch das Risiko von Umweltschäden durch Hydrauliköl, das durch Leckagen im Tank ausläuft, geringer als bei herkömmlichen Tanks mit geringeren Wandstärken des verwendeten Materials. Wenn in der vorliegenden Beschreibung aus Gründen der Vereinfachung nur von Hydrauliköl die Rede ist, so sind damit alle Flüssigkeiten gemeint, die in hydraulischen Systemen zur Übertragung einer Antriebskraft Verwendung finden.

Um den Vorratstank an einen Hydraulikkreislauf einer Antriebshydraulik anzuschlie-ßen, muss der im Strukturelement ausgebildete Hohlraum einen Zuleitungsanschluss und einen Sauganschluss aufweisen. Der Sauganschluss ist bevorzugt mit einer Hydraulikpumpe verbunden, die das im Strukturelement bevorratete Hydrauliköl über den Sauganschluss aus dem im Strukturelement ausgebildeten Hohlraum absaugt und auf ihrer Druckseite in einen Hydraulikkreislauf einer Arbeitshydraulik einspeist, um damit Arbeitsorgane der Erntebergungsvorrichtung anzutreiben. Die Rücklaufleitung des Hydraulikkreislaufs der Arbeitshydraulik ist an den Zuleitungsanschluss des im Strukturelement ausgebildeten Hohlraums angeschlossen. Hydrauliköl, das aus dem Hydraulikkreislauf wieder in den Vorratstank abgeleitet werden soll, kann durch den Zuleitungsanschluss wieder in den im Strukturelement ausgebildeten Hohlraum als Vorratstank zurückgeführt werden. Unabhängig vom Sauganschluss und dem Zuleitungsanschluss, die an einen Hydraulikkreislauf angeschlossen werden, kann der im Strukturelement ausgebildete Hohlraum zusätzlich über eine Befüllöffnung und/oder eine Ölablassöffnung verfügen, durch die Hydrauliköl nachgetankt oder aus dem im Strukturelement ausgebildeten Hohlraum abgelassen werden kann, beispielsweise bei einem Ölwechsel.

Nach einer Ausgestaltung der Erfindung handelt es sich bei dem Strukturelement um ein Querprofil eines Anbaurahmens. Das Querprofil eines Anbaurahmens ist als Vorratstank für Hydrauliköl besonders geeignet, weil es sich über einen zumindest grö-ßeren Teil der Arbeitsbreite der Erntebergungsvorrichtung erstreckt, es wegen der hohen Kräfte, die über den Anbaurahmen übertragen werden, einen vergleichsweise großen Profilquerschnitt aufweist und damit der von ihm umgrenzte Hohlraum ein vergleichsweise großes Fassungsvermögen aufweist. Da der Anbaurahmen räumlich zentral in der Erntebergungsvorrichtung angeordnet ist, ergeben sich auch kurze Anschlusswege für die Leitungen der Arbeitshydraulik, die aus dem Vorratstank mit Hydrauliköl versorgt wird. Der Anbaurahmen ist auch nahe des Schwerpunkts der Erntebergungsvorrichtung angeordnet, so dass sich eine günstige Balance der Maschine ergibt.

Nach einer Ausgestaltung der Erfindung ist der Vorratstank durch eine sich in einer Ruhelage der Erntebergungsvorrichtung in einer zumindest annähernd horizontalen Ebene erstreckende Trennwand in eine sich unterhalb der Trennwand befindliche Saugkammer und eine sich oberhalb der Trennwand befindliche Vorratskammer unterteilt, und der Sauganschluss mündet mit der ihm zugeordneten Mündungsöffnung in der Saugkammer. Da ein an eine Erntemaschine angebautes Schneidwerk häufig über unebenes Gelände bewegt wird, insbesondere so, dass sie sich in einer Schräglage quer und/oder längs zur Arbeitsrichtung befindet, und sich dabei über die Arbeitsbreite eines Schneidwerks gesehen erhebliche Höhenunterschiede zwischen der Höhenlage der äußeren Rändern des Vorratstanks ergeben, würde es immer wieder vorkommen, dass das Rahmenteil, in dem sich der Sauganschluss zur Speisung des Hydrauliksystems mit dem bevorrateten Hydrauliköl befindet, durch Schwallbewegungen des Hydrauliköls trockenfällt, obwohl aktuell Hydrauliköl für den Antrieb von Maschinenkomponenten benötigt wird. Das zeitweise Trockenfallen des Sauganschlusses würde zu Antriebsaussetzern der über die Arbeitshydraulik angetriebenen Maschinenkomponenten mit entsprechenden Erntegutverlusten führen. Ein Problem ist auch die Blasen- und Schaumbildung im Hydrauliköl, die insbesondere durch die Schwallbewegungen eintritt. Luftblasen in der Hydraulikflüssigkeit verringern die Leistung des hydraulischen Antriebs.

Wenn der den Vorratstank bildende Hohlraum durch eine sich in einer Ruhelage der Erntebergungsvorrichtung zumindest abschnittweise in einer zumindest annähernd horizontalen Ebene erstreckende Trennwand unterteilt wird, bekommt die Saugkammer mit der Trennwand eine Art Deckel, mit dem Schwallbewegungen des in der Saugkammer befindlichen Hydrauliköls zumindest verringert werden. Die Ruhelage entspricht dabei einer zumindest annähernd waagerechten Stellung der Erntebergungsvorrichtung. Volumenschwankungen, die sich insbesondere durch eine unterschiedliche Menge des von der Hydraulikpumpe aus dem Vorratstank in die Arbeitshydraulik abgesaugten Hydrauliköls im Vorratstank ergeben, können dadurch insbesondere über die auf der der Saugkammer abgewandten Seite der Trennwand befindliche Vorratskammer ausgeglichen werden, während der Füllstand des Hydrauliköls in der Saugkammer auch bei einem niedrigeren Füllstand des im Vorratstank bevorrateten Hydrauliköls auch bei Schrägstellungen und/oder Schwenkbewegungen der Erntebergungsvorrichtung zumindest annähernd gleich bleibt. Wenn sich die Saugkammer nicht über die volle Breite des Vorratstanks erstreckt, weil sich die Trennwand nur abschnittweise über eine Teilbreite des Vorratstanks erstreckt, kann die Trennwand nach unten hin abgeknickt sein und dadurch die Saugkammer in seitlicher Richtung begrenzen. Der abknickende Teil der Trennwand bildet dann ein Drosselelement, das den Austausch von Hydrauliköl zwischen der Saugkammer und der Vorratskammer drosselt. Der auf der der Saugkammer abgewandten Seite der Trennwand befindliche Teil der Vorratskammer befindet sich dann zumindest teilweise auch auf der Höhe der Saugkammer. Wenn der Sauganschluss mit der Mündungsöffnung in der Saugkammer mündet, wird das in der Arbeitshydraulik benötigte Hydrauliköl nur über diese Mündungsöffnung aus der Saugkammer abgesaugt und in die Arbeitshydraulik abgefördert. Wenn die Saugkammer durch die Trennwand kaum noch bereichsweise trockenfallen kann, weil die Trennwand Schwallbewegungen in der Saugkammer zumindest dämpft und Hydrauliköl selbst dann zumindest zeitweise in der Saugkammer hält, wenn sich die Mündungsöffnung des Sauganschlusses bei einer Schrägstellung der Erntebergungsvorrichtung um eine in Arbeitsrichtung weisende Achse oberhalb der Pegels des Hydrauliköls in der Vorratskammer befindet, steht an dem in der Saugkammer mündenden Sauganschluss unter nahezu allen Betriebsbedingungen eine Menge an Hydrauliköl bereit, mit der der jeweils aktuelle Volumenbedarf der Hydraulikpumpe an Hydrauliköl abgedeckt werden kann, ohne dass es zu Unterbrechungen im Volumenstrom des Hydrauliköls wegen Schwallbewegungen des Hydrauliköls im Vorratstank kommt.

Die Trennwand zwischen der Saugkammer und der Vorratskammer und/oder der ein Drosselelement bildende Teil der Trennwand ist nicht vollständig dicht, sondern ist mit einer oder mehreren passend dimensionierten Durchlassöffnungen versehen, die vergleichsweise geringe Ölmengen von der Vorratskammer in die Saugkammer und umgekehrt strömen lassen. Über die Durchlassöffnungen ist ein Druck- und Volumenausgleich zwischen der Vorratskammer und der Saugkammer durch hindurchströmendes Hydrauliköl möglich.

Wenn die Hydraulikpumpe über die Mündungsöffnung des in der der Saugkammer mündenden Sauganschlusses Hydrauliköl aus der Saugkammer abfördert, kann in der Vorratskammer befindliches Hydrauliköl durch die Durchlassöffnungen in der Trennwand und/oder im Drosselelement, die die Vorratskammer mit der Saugkammer verbinden, in die Saugkammer nachlaufen, die dadurch weiter mit einem hohen Füllstand befüllt bleibt. Wenn die Hydraulikpumpe Hydrauliköl aus der Saugkammer saugt, kann Hydrauliköl aus der Vorratskammer durch die Durchlassöffnungen in die Saugkammer nachfließen, solange sich der Pegelstand des Hydrauliköls in der Vorratskammer noch oberhalb der Durchlassöffnungen befindet. Selbst wenn sich teilweise Luft in der Vorratskammer befindet, kann diese wegen der Trennwand nicht ohne Weiteres in den Bereich der Saugkammer gelangen, in dem sich die Mündungsöffnung des Sauganschlusses befindet.

Wenn die Größe der Überlauföffnung auf ein geeignet großes Maß beschränkt ist, wirkt die Überlauföffnung auch als eine Art Drosselventil, das nur eine begrenzte Menge an Hydrauliköl zwischen der Saugkammer und der Vorratskammer hin und her strömen lässt. Befindet sich die Erntebergungsvorrichtung in einer Schrägstellung, oder wird diese in eine Schrägstellung verschwenkt, oder befindet sich diese in einer Schaukelbewegung, weil die Erntemaschine einen unebenen Boden überfährt, können über ein Zeitintervall nur beschränkte Mengen an Hydrauliköl zwischen der Saugkammer und der Vorratskammer durch die Überlauföffnung hin und her strömen. Ein schlagartiges Trockenfallen der Mündungsöffnung des Sauganschlusses wird dadurch selbst bei extremen Schwenk- und Schaukelbewegungen verhindert. Wenn sich aufgeschäumtes Hydrauliköl oder Luftblasen in der Saugkammer befindet, wird dieses schwerkraftbedingt über die Überlauföffnung in die Vorratskammer abgeschieden, wo sich der Schaum und die Blasen auflösen können, bevor das Hydrauliköl wieder in die Arbeitshydraulik befördert wird.

Bei dieser Ausgestaltung kann der Zuleitungsanschluss sowohl in der Saugkammer als auch in der Vorratskammer münden.

Nach einer Ausgestaltung der Erfindung ist bei einer Drittelung des Vorratstanks in Längserstreckungsrichtung die Mündungsöffnung des Zuleitungsanschlusses im mittleren Drittel angeordnet. Wenn sich der Vorratstank in seiner Längserstreckungsrichtung quer zur Arbeitsrichtung des Erntebergungsvorsatzes erstreckt, ergeben sich die größten Auslenkungen in vertikaler Richtung an den äußeren Enden der äußeren Drittel des Vorratstanks. Wenn die Mündungsöffnung des Zuleitungsanschlusses im mittleren Drittel angeordnet ist, verringert sich das Risiko, dass die Mündungsöffnung bei Bewegungen und Schräglagen der Erntebergungsvorrichtung trockenfallen könnte. Wenn sich die Mündungsöffnung des Zuleitungsanschlusses in der Saugkammer befindet, wird zunächst diese mit zuströmendem Hydrauliköl befüllt. Ist diese so weit befüllt, dass sie kein weiteres zuströmendes Hydrauliköl aufzunehmen vermag, strömt das zuströmende Hydrauliköl durch die Überlauföffnung in die Vorratskammer. Wenn die Mündungsöffnung des Sauganschlusses in einem äußeren Drittel des Vorratstanks und damit beabstandet zur Mündungsöffnung des Zuleitungsanschlusses angeordnet ist, können sich Ölschaum und Blasen, die sich in dem zuströmenden Hydrauliköl befinden könnten, in den oberen Bereich der Saugkammer und von dort durch die Überlauföffnung in die Vorratskammer bewegen, bevor sie mit dem umgebenden Hydrauliköl von der Hydraulikpumpe in die Mündungsöffnung des Sauganschlusses angesaugt werden. Auch durch diese Maßnahme verringert sich das Risiko, dass Luft in den Hydraulikkreislauf gelangen könnte.

Nach einer Ausgestaltung der Erfindung ist die Mündungsöffnung des Zuleitungsanschlusses in der Saugkammer angeordnet. Wenn die Mündungsöffnung des Zuleitungsanschlusses in der Saugkammer mündet, wird das frisch in den Vorratstank eingeleitete Hydrauliköl in die Saugkammer eingeleitet, in dem sich auch die Mündungsöffnung des Zuleitungsanschlusses befindet. Dadurch ist sichergestellt, dass das frisch zuströmende Hydrauliköl zu allererst dazu genutzt wird, den Teil der Saugkammer zu befüllen, in dem sich die Mündungsöffnung des Sauganschlusses befindet. Ist dieser Teil der Saugkammer voll, kann das frisch einströmende Hydrauliköl auch in andere Teile der Saugkammer und in die Vorratskammer gelangen.

Nach einer Ausgestaltung der Erfindung befindet sich die Mündungsöffnung des Sauganschlusses im äußeren Drittel der Länge des Vorratstanks in Längserstreckungsrichtung. Bei dieser Ausgestaltung kann das Volumen an Hydrauliköl, das sich im mittleren und gegenüberliegenden Drittel des Vorratstanks befindet, auch dann als Ölvorrat genutzt werden, wenn die Erntebergungsvorrichtung um eine in Arbeitsrichtung weisende Achse verschwenkt und damit nicht waagerecht gehalten ist. Das ist unproblematisch, wenn sich die Mündungsöffnung des Sauganschlusses in einer Höhe unterhalb des Pegelstandes des Hydrauliköls im Vorratstank befindet. Aber auch im umgekehrten Fall, wenn die Mündungsöffnung des Sauganschlusses oberhalb des Pegelstandes des Hydrauliköls im Vorratstank liegt, kann durch eine entsprechende Abschirmung des Bereichs der Mündungsöffnung des Sauganschlusses vermieden werden, dass in einer solchen Schwenkstellung der Erntebergungsvorrichtung die Mündungsöffnung des Sauganschlusses trockenfällt. Somit kann die Mündungsöffnung des Sauganschlusses sogar im äußeren Bereich der Länge des Vorratstanks in Längserstreckungsrichtung gesehen angeordnet werden.

Nach einer Ausgestaltung der Erfindung ist in der Vorratskammer ein den Austausch von Hydrauliköl innerhalb der Vorratskammer drosselndes Drosselelement angeordnet, dem benachbart eine Überlauföffnung zugeordnet ist, durch die in durch das Drosselelement voneinander getrennten Teilen der Vorratskammer befindliches Hydrauliköl hindurchströmen kann, wenn sich die Erntebergungsvorrichtung in einer schrägen Schwenkstellung befindet. Das den Innenraum der Vorratskammer teilende Drosselelement mindert die Schwallbewegungen des Hydrauliköls, wenn die Erntebergungsvorrichtung quer zur Arbeitsrichtung verschwenkt wird. Durch die gedrosselten Schwallbewegungen wird die Tendenz des Hydrauliköls, Schaum und Luftblasen zu bilden, verringert. Das Drosselelement verkleinert den freien Querschnitt der Vorratskammer in dem Bereich, in dem das Drosselelement angeordnet ist. Das Hydrauliköl kann dann durch die benachbart zum Drosselelement angeordnete Überlauföffnung strömen, allerdings in einer geringeren Menge, als es der Fall wäre, wenn das Drosselelement fehlen würde.

Nach einer Ausgestaltung der Erfindung ist die Mündungsöffnung des Sauganschlusses in einer zur Längserstreckungsrichtung des Vorratstanks ersten Richtung seitlich versetzt zur Überlauföffnung angeordnet, zwischen der Mündungsöffnung des Sauganschlusses und der Überlauföffnung ist ein erstes Drosselelement, das die Saugkammer von der Vorratskammer trennt, in der Saugkammer angeordnet, und in einer zur Längserstreckungsrichtung des Vorratstanks zweiten Richtung ist seitlich versetzt zur Überlauföffnung ein zweites Drosselelement in der Vorratskammer angeordnet. Die Erntebergungsvorrichtung kann in einer Richtung quer zur Arbeitsrichtung in einer waagerechten Lage gehalten sein, und sie kann in einer zur Waagerechten verschränkten Lage gehalten sein, so dass sie zur Waagerechten in einem Winkel steht. Wenn die Erntebergungsvorrichtung in einer verschränkten Lage zur Waagerechten gehalten ist, kommt es im Bereich der Überlauföffnung zu einem schwerkraftbedingten Ausgleich der Verteilung des Hydrauliköls innerhalb der Vorratskammer und zwischen der Saugkammer und der Vorratskammer. Da dabei durch turbulente Strömungen in diesem Bereich auch Ölschaum und Luftblasen entstehen und von einer Kammer in die andere fließen können, besteht dadurch das Risiko, dass Ölschaum und Luftblasen in den Bereich der Mündungsöffnung des Sauganschlusses gelangen und von dort aus in die Arbeitshydraulik gesaugt werden könnten, wenn sich die Mündungsöffnung des Sauganschlusses in diesem Bereich befindet. Deshalb ist es vorteilhaft, die Mündungsöffnung des Sauganschlusses seitlich versetzt zur Überlauföffnung und damit entfernt von der Überlauföffnung anzuordnen, wo die turbulenten Strömungen auftreten. Je nachdem, in welche Richtung die Mündungsöffnung des Sauganschlusses im Verhältnis zur Überlauföffnung versetzt ist und in welche Drehrichtung der Erntebergungsvorsatz um eine in Arbeitsrichtung weisende Achse verschwenkt gehalten ist, kann das aber nachteilig für das Ziel sein, auch in dieser Schwenklage im Bereich der Mündungsöffnung eine Menge an Hydrauliköl in der Saugkammer vorzuhalten, bei der die Mündungsöffnung nicht trockenfällt. Wenn die Mündungsöffnung des Sauganschlusses in einer ersten seitlichen Richtung versetzt zur Überlauföffnung angeordnet und die Erntebergungsvorrichtung in einer solchen Schwenklage gehalten ist, dass dabei das äußere Ende der Erntebergungsvorrichtung in der ersten seitlichen Richtung im Verhältnis zur Waagerechten angehoben ist, würde das von der Überlauföffnung aus gesehen in der ersten Richtung in der Saugkammer befindliche Hydrauliköl in den von der Überlauföffnung gesehen in den in der zweiten Richtung befindlichen Teil der Saugkammer laufen, soweit der dortige Hohlraum noch nicht vollständig mit Hydrauliköl gefüllt ist. Außerdem würde in dieser Schwenklage in der Saugkammer befindliches Hydrauliköl in die Vorratskammer und innerhalb der Vorratskammer zwischen den durch das zweite Drosselelement voneinander getrennten Teilen durch die Überlauföffnung strömen, und zwar vorrangig in den Teil, der sich von der Überlauföffnung gesehen ebenfalls in der zweiten Richtung befindet. Durch diese Strömungsbewegungen kann in kurzer Zeit so viel Hydrauliköl aus dem sich in der ersten Richtung erstreckenden Teil der Saugkammer in die sich in der zweiten Richtung erstreckenden Teile der Saugkammer und der Vorratskammer fließen, dass dadurch die Mündungsöffnung des Sauganschlusses trockenfiele und die Hydraulikpumpe Luft oder Ölschaum aus der Saugkammer ansaugen würde. Um eine solche Wirkung, insbesondere einen allzu schnell eintretenden Verlust von Hydrauliköl in dem höher gehaltenem Teil der Saugkammer zu vermeiden, in dem sich die Mündungsöffnung des Sauganschlusses befindet, wird vorgeschlagen, zwischen der in einer ersten Richtung von der Überlauföffnung aus gesehen angeordneten Mündungsöffnung des Sauganschlusses ein erstes Drosselelement in der Saugkammer anzuordnen, und in einer zur Längserstreckungsrichtung des Vorratstanks und von der Überlauföffnung aus gesehen zweiten Richtung seitlich versetzt zur Überlauföffnung ein zweites Drosselelement in der Vorratskammer anzuordnen.

Das erste Drosselelement hat dabei die Aufgabe, den Abfluss von Hydrauliköl aus dem sich in der ersten Richtung erstreckenden Teil der Saugkammer zumindest zu verlangsamen, wenn die Erntebergungsvorrichtung in einer Schwenklage gehalten ist, in der das in der ersten Richtung befindliche äußere Ende der Erntebergungsvorrichtung gegenüber der Waagerechten angehoben ist. Das erste Drosselelement kann beispielsweise als eine einfache Blechplatte ausgestaltet sein, die den freien Querschnitt der Saugkammer zumindest bereichsweise sperrt und deren Umfangsrand zu den benachbarten Innenoberflächen des Strukturelements zumindest bereichsweise Durchflussschlitze offenlässt und/oder die Durchlassöffnungen aufweist. Da bei einer solchen Ausgestaltung des Drosselelements der freie Querschnitt der Saugkammer auf die schmalen Schlitze zwischen dem Umfangsrand des Drosselelements und der Innenoberfläche des Strukturelements und/oder die Durchlassöffnungen verengt ist, wird durch das Drosselelement der bei einem freien Querschnitt theoretisch mögliche Durchsatz an Hydrauliköl bei Schrägstellungen der Erntebergungsvorrichtung erheblich verringert. So kann in einem Zeitintervall nur eine geringere Menge an Hydrauliköl aus dem Teil der Saugkammer ausströmen, die sich in dem von der Überlauföffnung entfernten Seite des ersten Drosselelements befindet. Insbesondere kann auch bei einer starken Verschwenkstellung der Erntebergungsvorrichtung zunächst keine Luft in diesen Teil der Saugkammer gelangen, weil dieser Teil der Saugkammer durch die Trennwand, die Überlauföffnung und die ersten und zweiten Drosselelemente gegen sonst möglicherweise eindringende Luft, Blasen und Ölschaum abgeschirmt ist. Ist die Erntebergungsvorrichtung in einer Schwenklage gehalten, in der das in der ersten Richtung befindliche äußere Ende der Erntebergungsvorrichtung gegenüber der Waagerechten abgesenkt ist, verhindert das erste Drosselelement, dass Ölschaum und Luftblasen in den Bereich der Mündungsöffnung gelangen und von dort in die Arbeitshydraulik abfließen können.

Das zweite Drosselelement hat die Aufgabe, den Abfluss von Hydrauliköl aus der Saugkammer in die Vorratskammer zumindest zu verlangsamen, wenn die Erntebergungsvorrichtung in einer Schwenklage gehalten ist, in der das in der ersten Richtung befindliche äußere Ende der Erntebergungsvorrichtung gegenüber der Waagerechten angehoben ist. Dadurch wird in dieser Schwenklage der Erntebergungsvorrichtung zunächst der sich in der zweiten Richtung erstreckende Teil der Saugkammer mit aus dem ersten Teil der Saugkammer abfließendem Hydrauliköl gefüllt, bevor sich auch der Füllstand in der Vorratskammer mit diesem Hydrauliköl erhöht. Auch Hydrauliköl, das sich in dem sich in einem vom zweiten Drosselelement abgeteilten Teil der Vorratskammer befindet, wird vom zweiten Drosselelement ebenfalls zunächst zumindest teilweise zurückgehalten und durch die Überlauföffnung in den anderen Teil der Vorrats kammer umgeleitet, von wo es durch die geringere Strömungsgeschwindigkeit zumindest auch in die Saugkammer strömen kann. Das aus dem sich in der ersten Richtung ersteckenden Teil der Vorratskammer befindliche Hydrauliköl wird also durch das zweite Drosselelement zunächst dafür genutzt, die Saugkammer aufzufüllen, bevor es in den sich in der zweiten Richtung erstreckenden Teil der Vorratskammer strömen kann. Dadurch wird der Füllstand mit Hydrauliköl in der Saugkammer möglichst hoch gehalten. Wenn die Erntebergungsvorrichtung in einer Schwenklage gehalten ist, in der das in der ersten Richtung befindliche äußere Ende der Erntebergungsvorrichtung gegenüber der Waagerechten abgesenkt ist, bremst das zweite Drosselelement den Abfluss von Hydrauliköl aus dem sich in der zweiten Richtung der Vorratskammer erstreckenden Teil der Vorratskammer. Die turbulenten Strömungen im Bereich der Überlauföffnung werden dadurch verringert, und es kann in dieser Schwenklage der Erntebergungsvorrichtung vorrangig Hydrauliköl aus dem sich in der zweiten Richtung erstreckenden Teil der Saugkammer in den sich in der ersten Richtung erstreckenden Teil der Saugkammer fließen. Die ersten und zweiten Drosselelemente bewirken auf diese Weise eine von der aktuellen Schwenklage der Erntebergungsvorrichtung weniger abhängige ausreichende Befüllung des Teils der Saugkammer, in der sich die Mündungsöffnung des Sauganschlusses befindet.

Nach einer Ausgestaltung der Erfindung weist das erste und/oder zweite Drosselelement im unteren Bereich eine oder mehrere Durchlassöffnungen auf. Die im unteren Bereich angeordneten und ausgebildeten Durchlassöffnungen dienen dem Zweck, eine möglichst blasenfreie Fraktion des an dem Drosselelement anstehenden Hydrauliköls das Drosselelement passieren zu lassen, während nicht blasenfreies oder schaumiges Hydrauliköl von dem oberen geschlossen ausgebildeten Abschnitt der Drosselelemente zurückgehalten wird. Bei einer Durchlassöffnung kann es sich um ein oder mehrere Löcher, einen oder mehrere Einschnitte und/oder eine oder mehrere Ausnehmungen im Material des Drosselelements handeln, die vollständig oder teilweise vom Material des Drosselelements umgrenzt sind. Bei einem betriebsüblichen Füllstand von Hydrauliköl im Vorratstank befinden sich die Durchlassöffnungen unterhalb der Oberfläche des Hydrauliköls im Vorratstank, so dass blasenfreies Öl durch die Durchlassöffnungen hin und her strömen kann, während sich blasen- und schaum behaftetes Öl eher im Bereich der Oberfläche des Hydrauliköls befindet und dieses durch die dort nicht vorhandenen Durchlassöffnungen abgeskimmt wird. Der Trenneffekt zwischen schaum- und blasenbehaftetem Hydrauliköl tritt aber nicht nur in einer waagerechten Stellung der Erntebergungsvorrichtung ein, sondern gerade auch dann, wenn die Erntebergungsvorrichtung um eine in Arbeitsrichtung weisende Achse gedreht gehalten ist oder wenn die Erntebergungsvorrichtung gedreht wird und dadurch Hydrauliköl aus einem Bereich des Vorratstanks in andere Bereiche strömt.

Nach einer Ausgestaltung der Erfindung ist im Bereich der Überlauföffnung eine schwenkbeweglich gelagerte Drosselklappe angeordnet, die die Überlauföffnung durchgreift und von dem durch die Überlauföffnung strömenden Hydrauliköl beweglich gehalten ist. Die Drosselklappe hat den Zweck, die Durchflussgeschwindigkeit des durch die Überlauföffnung strömenden Hydrauliköls zu drosseln. Indem diese die Überlauföffnung durchgreift, wird das Hydrauliköl dazu gezwungen, die Drosselklappe bereichsweise seitlich zu umströmen. Dadurch entsteht ein Strömungswiderstand, durch den sich die Strömungsgeschwindigkeit verringert. Die bewegliche Drosselklappe kann insbesondere zusätzlich zu den in der Saugkammer und der Vorratskammer angeordneten Drosselelementen genutzt werden, um die Strömung im Bereich der Überlauföffnung in eine je nach Fließrichtung vorteilhafte Richtung zu beeinflussen. Indem die Drosselklappe von dem durch die Überlauföffnung strömenden Hydrauliköl bewegt wird, schwenkt sie in die Fließrichtung des Hydrauliköls. Je nachdem, wie die Drosselklappe geformt ist, in welche Richtung das Hydrauliköl strömt und wie die Drosselklappe im Bereich der Überlauföffnung angeordnet ist, kann sich daraus eine den Ölfluss stark oder weniger stark hemmende Wirkung ergeben. Vorteilhaft ist die Drosselklappe so angeordnet, dass sie einen prioritären Zufluss des Hydrauliköls in den Bereich der Saugkammer fördert, in dem sich die Mündungsöffnung des Sauganschlusses befindet. Da die Drosselklappe die Überlauföffnung durchgreift und dadurch den Durchtritt des Hydrauliköls durch die Überlauföffnung abbremst, verringern sich in diesem Bereich die turbulenten Strömungen im bevorrateten Hydrauliköl, in denen Gasblasen und Ölschaum entstehen. Dadurch wird das Risiko verringert, dass Luft in den Bereich der Mündungsöffnung des Sauganschlusses gelangen kann.

Nach einer Ausgestaltung der Erfindung ist die Schwenkbeweglichkeit der Drosselklappe in zumindest eine Schwenkrichtung durch einen Anschlag begrenzt. Wenn die Drosselklappe von der Strömungsbewegung des Hydrauliköls gegen den Anschlag gedrückt wird, bildet die Drosselklappe in dieser Stellung einen Fließwiderstand aus, der die Durchflussmenge des Hydrauliköls begrenzt. Im Bereich der Drosselklappe kann sich in einer gegen den Anschlag fixierten Stellung der Drosselklappe ein Staudruck durch das an der Drosselklappe anstehende Hydrauliköl aufbauen, durch den das Hydrauliköl in den Teil der Saugkammer umgeleitet und hineingedrückt wird, in dem sich die Mündungsöffnung des Sauganschlusses befindet. Hydrauliköl, das sich in dem Teil der Saugkammer befindet, in dem die Mündungsöffnung ausgebildet ist, kann zudem von der gegen den Anschlag blockiert gehaltenen Drosselklappe daran gehindert werden, in den von der Mündungsöffnung entfernten Teil der Saugkammer und/oder in die Vorratskammer abzulaufen. Insbesondere, wenn der Anschlag so positioniert ist, dass er eine von der Mündungsöffnung des Sauganschlusses weg weisende Schwenkbewegung der Drosselklappe blockiert, kann die Drosselklappe dabei behilflich sein, das Hydrauliköl auch in einer ungünstigen Schwenkstellung der Erntebergungsvorrichtung im Bereich der Mündungsöffnung des Sauganschlusses zu halten. Eine einfache Konstruktion ergibt sich, wenn als Anschlag ein Rand der Überlauföffnung vorgesehen ist. Die Drosselklappe kann über eine Schwenkachse schwenkbeweglich mit einem Drosselelement verbunden sein.

Nach einer Ausgestaltung der Erfindung drosselt die bewegliche Drosselklappe das Hydrauliköl in beiden möglichen Fließrichtungen. Da sich Schaum und Blasen im Bereich der Überlauföffnung im Hydrauliköl unabhängig von der Fließrichtung ergeben können, ist vorteilhaft, wenn die Drosselklappe den Fluss des Hydrauliköls auch in beiden Fließrichtungen drosselt.

Nach einer Ausgestaltung der Erfindung ist der Vorratstank mit einem Schnüffelventil verbunden, das Luft in den Vorratstank strömen lässt, wenn der im Vorratstank herrschende Druck einen Schwellwert unterschreitet. Der Vorratstank kann alternativ oder ergänzend mit einem Entlüftungsventil verbunden sein, das öffnet, wenn der im Vorratstank herrschende Druck einen Schwellwert überschreitet. Durch das Schnüffelventil und/oder das Entlüftungsventil kann der Vorratstank innerhalb der Schwellwerte und je nach Auslegung der Schnüffelventile druckbehaftet oder drucklos betrieben werden, so dass kein dauernder Luftaustausch mit Umgebungsluft stattfindet und dadurch kein Verschmutzungseintrag in den Tank erfolgt. Beim druckbehafteten Betrieb wird vermieden, dass Öl durch das Entlüftungsventil in die Umwelt entweichen kann, insbesondere dann, wenn durch eine Schrägstellung des Erntebergungsvorsatzes das Entlüftungsventil tankinnenseitig mit Öl überdeckt ist.

Nach einer Ausgestaltung der Erfindung weist das Strukturelement des Rahmens über die Längserstreckungsrichtung des fluid-dicht ausgestalteten Vorratstanks hinweg zwei C-Profile auf, die den Vorratstank in Längserstreckungsrichtung begrenzen und mit ihren offenen Längsseiten einander zugewandt angeordnet über ihre Länge im Anstoßbereich miteinander verschweißt sind, wobei die Trennwand zwischen die Schenkel der einander zugewandten C-Profile gelegt und mit diesen verschweißt ist. Mit den C-Profilen kann ein entsprechendes Strukturelement mit einer im inneren Hohlraum angeordneten Trennwand einfach und kostengünstig hergestellt werden, wobei das Strukturelement eine ausreichende Festigkeit aufweist, um die auf den Rahmen der Erntebergungsvorrichtung einwirkenden Kräfte aufzunehmen und abzuleiten.

Nach einer Ausgestaltung der Erfindung handelt es sich bei der Erntebergungsvorrichtung um eine mehrteilige Maschine mit mindestens einem Mittelrahmen und zwei seitlich dazu angeordneten und schwenkbeweglich mit dem Mittelrahmen verbundenen Anbaurahmen, wobei das Strukturelement das mittige Querprofil des Mittelrahmens ist. Bei mehrteiligen Erntebergungsvorrichtungen ist das Querprofil des Mittelrahmens aus Balance- und Bauraumgründen besonders dazu geeignet, als Vorratstank genutzt zu werden.

Es wird ausdrücklich darauf hingewiesen, dass der Gegenstand des Anspruchs 1 jeweils für sich, aber auch in beliebigen Kombinationen von mehreren Unteransprüchen miteinander mit den Merkmalen der Unteransprüche kombinierbar ist, soweit dem keine technischen Hindernisse entgegenstehen.

Weitere Abwandlungen und Ausgestaltungen der Erfindung lassen sich der nachfolgenden gegenständlichen Beschreibung, den Zeichnungen und den Ansprüchen entnehmen.

Die Erfindung soll nun anhand eines Ausführungsbeispiels näher erläutert werden. Es zeigen:
- Fig. 1:: eine ausschnittweise Ansicht auf eine Erntebergungsvorrichtung,
- Fig. 2:: eine Schnittansicht auf ein Querprofil,
- Fig. 3:: eine vergrößerte Ansicht des in Fig. 2 markierten Bereichs,
- Fig. 4:: eine perspektivische Darstellung des in Fig. 3 dargestellten Bereichs.

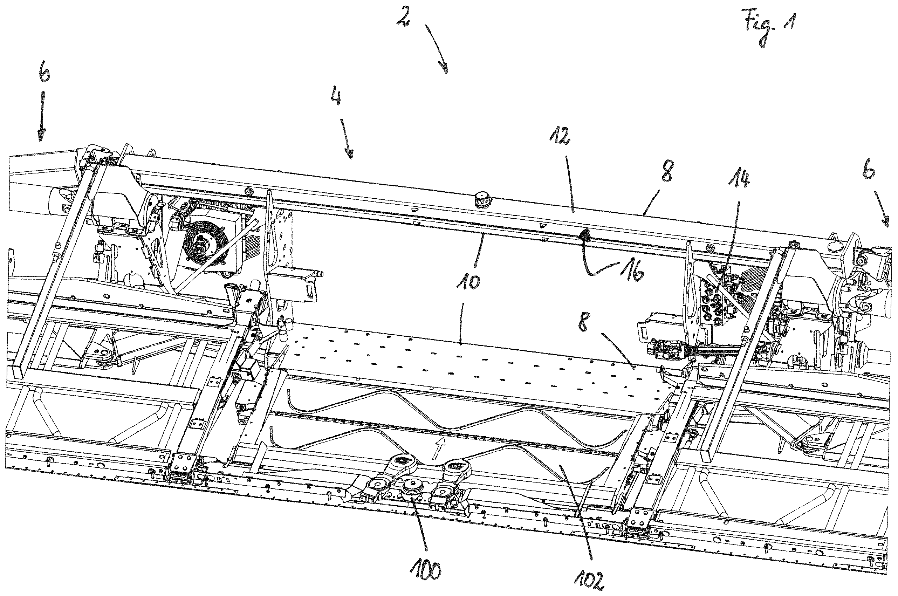

In Fig. 1 ist eine ausschnittweise Ansicht auf eine Erntebergungsvorrichtung 2 gezeigt, die einen Mittelrahmen 4 und einen seitlich dazu angeordneten und schwenkbeweglich mit dem Mittelrahmen 4 verbundenen Anbaurahmen 6 aufweist. Als Ausführungsbeispiel wird die Erfindung anhand eines mehrteiligen Draper-Schneidwerks erläutert, mit dem auf dem Feld stehendes Getreide geschnitten, auf den Förderbändern des Draper-Schneidwerks abgelegt, mit den Förderbändern mittig zusammengeführt und nach hinten an den Schrägförderer eines Mähdreschers abgegeben wird. Als Erntebergungsvorrichtung 2 kommen abweichend vom Ausführungsbeispiel auch andere Typen von Getreideschneidwerken, aber auch Maispflücker, Pickup-Vorrichtungen und dergleichen in Betracht.

Der Mittelrahmen 4 verfügt seinerseits über einen Rahmen 10, der aus mehreren Strukturelementen 8 zusammengesetzt ist. Eines der Strukturelemente 8 ist das Querprofil 12, das im Ausführungsbeispiel innen hohl ausgebildet ist. Am Rahmen 10 ist als ein Beispiel für eine Hydraulikkomponente 14 ein Ventilblock gezeigt, mit dem hydraulische Funktionen der Erntebergungsvorrichtung gesteuert werden.

Als ein Beispiel für ein Organ 100 zum Schneiden und/oder Aufnehmen von Erntegut ist im vorderen Bereich der Erntebergungsvorrichtung 2 einen Ölmotor dargestellt, der hydraulisch angetrieben ist und dessen Drehbewegung über ein Getriebe auf zwei in Fig. 1 dargestellte Hebelarme übertragen wird, mit denen ein jeweiliger daran angeschlossener, zeichnerisch aber nicht näher dargestellter Messerbalken oszillierend angetrieben wird. Mit den Messerbalken wird Erntegut geschnitten, das danach auf die Förderbänder des Draper-Schneidwerks fällt. Während die das Erntegut zur Mitte des Erntebergungsvorsatzes 2 fördernden Förderbänder, die im Anbaurahmen 6 gehalten sind, aus Gründen der zeichnerischen Vereinfachung nicht dargestellt sind, ist als ein Beispiel für ein Organ 102 zur Abförderung des geschnittenen und/oder aufgenommenen Ernteguts jedoch das mittige Förderband gezeigt, mit dem das darauf abgelegte Erntegut in Pfeilrichtung abgefördert wird. Der Ventilblock als ein Beispiel für Hydraulikkomponenten 14 dient zur Steuerung und/oder zum Antrieb der vorgenannten Organe 100, 102.

Der Vorratstank 16 zur Bevorratung der für den Betrieb der Hydraulikkomponenten 14 benötigten Flüssigkeit ist in dem innen hohl ausgebildeten Strukturelement 8 des Rahmens 10 als fluiddicht ausgestalteter Vorratstank 16 zur Bevorratung der für den Betrieb der Hydraulikkomponenten 14 benötigten Flüssigkeit ausgeführt. Die genauere Ausgestaltung des Vorratstanks 16 ist in den nachfolgenden Figuren näher dargestellt.

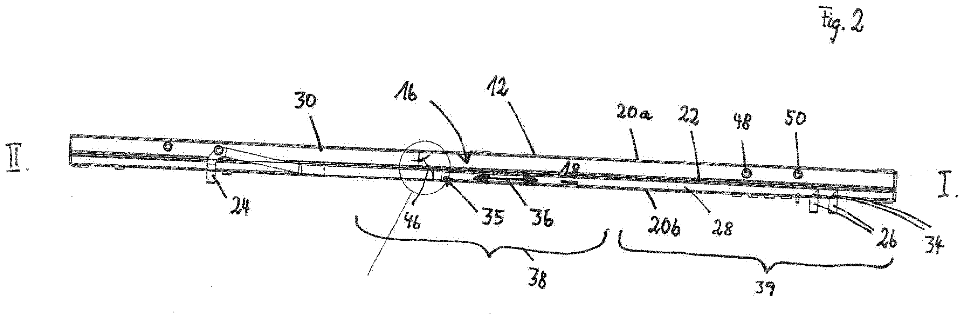

In Fig. 2 ist eine Schnittansicht auf ein Querprofil 12 als Strukturelement 8 gezeigt. Im Querprofil 12 ist ein Hohlraum 18 ausgebildet, der den Vorratstank 16 bildet und der einen Zuleitungsanschluss 24 und einen Sauganschluss 26 aufweist. Der Sauganschluss 26 mündet mit der Mündungsöffnung 34 in der Saugkammer 28. Drittelt man die Länge des Vorratstanks 16 in Längserstreckungsrichtung 36, so ist die Mündungsöffnung 35 des Zuleitungsanschlusses 24 im mittleren Drittel 38, im Ausführungsbeispiel ebenfalls innerhalb der Saugkammer 28, angeordnet. Wenn die an den Sauganschluss 26 angeschlossene Hydraulikpumpe des Hydrauliksystems der Erntebergungsvorrichtung 2 Hydrauliköl aus dem Vorratstank 16 pumpt, dann wird das Hydrauliköl über die Mündungsöffnung 34 des Sauganschlusses 26 aus der Saugkammer 28 gesaugt. Die Mündungsöffnung 34 des Sauganschlusses 26 befindet sich im äußeren Drittel 39 der Länge des Vorratstanks 16 in Längserstreckungsrichtung 36, und zwar im äußeren Bereich der Länge des Vorratstanks 16 in Längserstreckungsrichtung 36. Für den störungsfreien Betrieb des Hydrauliksystems der Erntebergungsvorrichtung 2 ist es also wichtig, dass an der Mündungsöffnung 34 immer genügend Hydrauliköl ansteht, um zu vermeiden, dass die Hydraulikpumpe über die Mündungsöffnung 34 Luft ansaugt.

Der Hohlraum 18 wird in der durch einen Doppelpfeil kenntlich gemachten Längserstreckungsrichtung 36 seitlich von zwei C-Profilen 20a, 20b begrenzt, die mit ihren offenen Längsseiten einander zugewandt angeordnet über ihre Länge im Anstoßbereich miteinander verschweißt sind. Dabei ist die Trennwand 22 zwischen die Schenkel der einander zugewandten C-Profile 20a, 20b gelegt und mit diesen verschweißt. Unterhalb der Trennwand 22 befindet sich die Saugkammer 28, oberhalb der Trennwand 22 ist die Vorratskammer 30 ausgebildet. Die Trennwand 22 erstreckt sich in der dargestellten Ruhelage der Erntebergungsvorrichtung 2 in einer zumindest annähernd horizontalen Ebene. Im Ausführungsbeispiel endet die Trennwand 22 kurz hinter der Mündungsöffnung 35 und kurz vor der Drosselklappe 46. Auf der der Saugkammer 28 gegenüberliegenden Seite des Vorratstanks 16 ist die Vorratskammer 30 deshalb höher als im Bereich der Saugkammer. In dem Bereich, in dem im Ausführungsbeispiel die Trennwand 22 endet, befinden sich die Drosselelemente 40, 42 mit der dazwischen befindlichen Mündungsöffnung 32.

Im Vorratstank 16 ist ein Schnüffelventil 48 sowie ein Entlüftungsventil 50 angeordnet, um Überdruck- oder Unterdrucksituationen im Vorratstank 16 zu steuern.

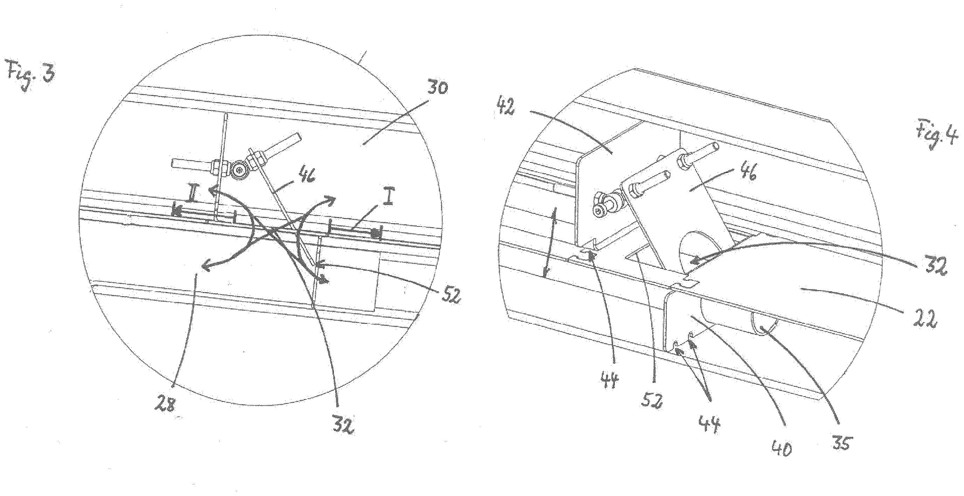

In Fig. 3 ist eine vergrößerte Ansicht des in Fig. 2 mit dem dort durch den Kreis markierten Bereich als Schnittansicht gezeigt. In der Schnittansicht ist die in die Trennwand 22 eingeschnittene Überlauföffnung 32 erkennbar, durch die die verschiedenen Teile der Vorratskammer 30 miteinander verbunden sind. Die im Vorratstank 16 befindliche Flüssigkeit kann zwischen den beiden durch das Drosselelement 42 geteilten Teilen der Vorratskammer 30 durch die Überlauföffnung 32 hin und her strömen, wenn sich die räumliche Lage der Erntebergungsvorrichtung 2 bei der Erntearbeit verändert, wie durch den Mehrfachpfeil angedeutet.

Die jeweiligen Strömungsbewegungen des Hydrauliköls zwischen der Saugkammer 28 und der Vorratskammer 30 sowie innerhalb der Vorratskammer 30 werden durch ein erstes Drosselelement 40 und ein zweites Drosselelement 42 abgebremst. Die im Ausführungsbeispiel gewählte Anordnung der Drosselelemente 40, 42 folgt aus dem Umstand, dass die Mündungsöffnung 34 des Sauganschlusses 26 in einer zur Längserstreckungsrichtung 36 des Vorratstanks 16 ersten Richtung I seitlich versetzt zur Überlauföffnung 32 angeordnet ist. Das erste Drosselelement 40 ist in der Saugkammer 28 zwischen der Mündungsöffnung 34 des Sauganschlusses 26 und der Überlauföffnung 32 angeordnet. Das erste Drosselelement 40 teilt die Saugkammer 28 auch zusammen mit der Trennwand 22 von der Vorratskammer 30 ab. Das zweite Drosselelement 42 ist in einer zur Längserstreckungsrichtung 36 des Vorratstanks 16 zweiten Richtung II seitlich versetzt zur Überlauföffnung 32 in der Vorratskammer 30 angeordnet. Wie aus den Fig. 2, 3 und 4 ersichtlich mündet die Mündungsöffnung 35 des Zuleitungsanschlusses 24 in einem Bereich der Saugkammer 28, der auf der der Überlauföffnung 32 abgewandten Seite des Drosselelements 40 liegt. Somit befinden sich beide Mündungsöffnungen 34,35 auf dieser Seite des Drosselelements 40.

Die Fig. 4 zeigt eine perspektivische Darstellung des in Fig. 3 dargestellten Bereichs. In der perspektivischen Ansicht ist erkennbar, dass das erste Drosselelement 40 im unteren Bereich mehrere Durchlassöffnungen 44 aufweist, durch die Hydrauliköl hindurchfließen kann. Die von den Drosselelementen 40,42 abgedeckte Fläche kann durch die Durchlassöffnungen 44, aber auch durch insgesamt kleinere Maße der Drosselelemente 40,42 kleiner sein als die Fläche des freien Querschnitts des Vorratstanks 16 im Bereich der Drosselelemente 40,42, sodass Hydrauliköl noch weiter an den Drosselelementen 40, 42 vorbeiströmen kann.

Wie aus den Fig. 3 und 4 ersichtlich ist, befindet sich im Bereich der Überlauföffnung 32 eine schwenkbeweglich gelagerte Drosselklappe 46, die die Überlauföffnung 32 durchgreift. Die Drosselklappe 46 ist auf einer Welle gelagert, die im Ausführungsbeispiel am zweiten Drosselelement 42 gehalten ist. Wenn Hydrauliköl durch die Überlauföffnung 32 hindurchströmt, drückt das Hydrauliköl dabei gegen die Fläche der Drosselklappe 46. Soweit die Drosselklappe 46 nicht gegen einen Anschlag 52 gedrückt und dadurch in ihrer Beweglichkeit blockiert wird, kann die Drosselklappe 46 dem Druck des anströmenden Hydrauliköls durch eine Schwenkbewegung nachgeben. Auf diese Weise ist die Drosselklappe 46 von dem durch die Überlauföffnung 32 strömenden Hydrauliköl beweglich gehalten. Im Ausführungsbeispiel ist ein in der ersten Richtung I wirkender und in Fig. 3 kenntlich gemachter Anschlag 52 das erste Drosselelement 40, während der in der zweiten Richtung II wirkende Anschlag 52 von der in Fig. 4 erkennbaren Kante der Überlauföffnung 32 gebildet ist. Zwischen diesen beiden Anschlägen 52 ist die Drosselklappe 46 der Strömung des Hydrauliköls in beiden möglichen Strömungsrichtungen folgend beweglich.

Die Erfindung ist nicht auf das vorstehend erläuterte Ausführungsbeispiel beschränkt. Einem Fachmann bereitet es keine Schwierigkeiten, das Ausführungsbeispiel auf eine ihm als geeignet erscheinende Weise abzuwandeln, um es an einen konkreten Anwendungsfall anzupassen.

### Bezugszeichenliste

- 2: Erntebergungsvorrichtung
- 4: Mittelrahmen
- 6: Anbaurahmen
- 8: Strukturelement
- 10: Rahmen
- 12: Querprofil
- 14: Hydraulikkomponente
- 16: Vorratstank
- 18: Hohlraum
- 20: C-Profil
- 22: Trennwand
- 24: Zuleitungsanschluss
- 26: Sauganschluss
- 28: Saugkammer
- 30: Vorratskammer
- 32: Überlauföffnung
- 34: Mündungsöffnung Sauganschluss
- 35: Mündungsöffnung Zuleitungsanschluss
- 36: Längserstreckungsrichtung
- 38: mittleres Drittel
- 39: äußeres Drittel
- 40: erstes Drosselelement
- 42: zweites Drosselelement
- 44: Durchlassöffnung
- 46: Drosselklappe
- 48: Schnüffelventil
- 50: Entlüftungsventil
- 52: Anschlag
- 100: Schneidorgan
- 102: Abförderorgan
- I: erste Richtung
- II: zweite Richtung

## Patentansprüche

1. Erntebergungsvorrichtung (2) mit einem aus mehreren Strukturelementen (8) zusammengesetzten Rahmen (10), von denen zumindest eines innen hohl ausgebildet ist, Organen (100) zum Schneiden und/oder Aufnehmen von Erntegut, Organen (102) zur Abförderung des geschnittenen und/oder aufgenommenen Ernteguts, Hydraulikkomponenten (14) zur Steuerung und/oder zum Antrieb der vorgenannten Organe (100, 102) und einem Vorratstank (16) zur Bevorratung der für den Betrieb der Hydraulikkomponenten (14) benötigten Flüssigkeit, **dadurch gekennzeichnet, dass** der Vorratstank (16) in dem innen hohl ausgebildeten Strukturelement (8) des Rahmens (10) als fluiddicht ausgestalteter Vorratstank (16) zur Bevorratung der für den Betrieb der Hydraulikkomponenten (14) benötigten Flüssigkeit ausgeführt ist, wobei der im Strukturelement (8) ausgebildete Hohlraum (18) einen Zuleitungsanschluss (24) und einen Sauganschluss (26) aufweist.

2. Erntebergungsvorrichtung (2) nach Anspruch 1, **dadurch gekennzeichnet, dass** es sich bei dem Strukturelement (8) um ein Querprofil (12) eines Rahmens (10) handelt.

3. Erntebergungsvorrichtung (2) nach Anspruch 1 oder 2, **dadurch gekennzeichnet, dass** der Vorratstank (16) durch eine sich in einer Ruhelage der Erntebergungsvorrichtung (2) in einer zumindest annähernd horizontalen Ebene erstreckende Trennwand (22) in eine sich unterhalb der Trennwand (22) befindliche Saugkammer (28) und eine sich oberhalb der Trennwand (22) befindliche Vorratskammer (30) unterteilt ist, und der Sauganschluss (26) mit der ihm zugeordneten Mündungsöffnung (34) in der Saugkammer (28) mündet.

4. Erntebergungsvorrichtung (2) nach einem der vorhergehenden Ansprüche, **dadurch gekennzeichnet, dass** bei einer Drittelung des Vorratstanks (16) in Längserstreckungsrichtung (36) die Mündungsöffnung (34) des Zuleitungsanschlusses (26) im mittleren Drittel (38) angeordnet ist.

5. Erntebergungsvorrichtung nach Anspruch 3 oder 4, **dadurch gekennzeichnet, dass** die Mündungsöffnung (34) des Zuleitungsanschlusses (26) in der Saugkammer (28) angeordnet ist.

6. Erntebergungsvorrichtung nach einem der Ansprüche 3 bis 5, **dadurch gekennzeichnet, dass** sich die Mündungsöffnung (34) des Sauganschlusses (26) im äußeren Drittel (39) der Länge des Vorratstanks (16) in Längserstreckungsrichtung (36) befindet.

7. Erntebergungsvorrichtung (2) nach einem der vorhergehenden Ansprüche, **dadurch gekennzeichnet, dass** in der Vorratskammer (30) ein den Austausch von Hydrauliköl innerhalb der Vorratskammer (30) drosselndes Drosselelement (42) angeordnet ist, dem benachbart eine Überlauföffnung (32) zugeordnet ist, durch die in durch das Drosselelement (42) voneinander getrennten Teilen der Vorratskammer (30) befindliches Hydrauliköl hindurchströmen kann, wenn sich die Erntebergungsvorrichtung in einer schrägen Schwenkstellung befindet.

8. Erntebergungsvorrichtung (2) nach einem der vorhergehenden Ansprüche, **dadurch gekennzeichnet, dass** die Mündungsöffnung (34) des Sauganschlusses (26) in einer zur Längserstreckungsrichtung (36) des Vorratstanks (16) ersten Richtung (I) seitlich versetzt zur Überlauföffnung (32) angeordnet ist, zwischen der Mündungsöffnung (34) des Sauganschlusses (26) und der Überlauföffnung (32) ein erstes Drosselelement (40) in der Saugkammer (28) angeordnet ist, das die Saugkammer (28) von der Vorratskammer (30) trennt, und in einer zur Längserstreckungsrichtung (36) des Vorratstanks (16) zweiten Richtung (II) seitlich versetzt zur Überlauföffnung (32) ein zweites die Vorratskammer (30) teilendes Drosselelement (42) in der Vorratskammer (30) angeordnet ist.

9. Erntebergungsvorrichtung (2) nach Anspruch 8, **dadurch gekennzeichnet, dass** das erste und/oder zweite Drosselelement (40, 42) im unteren Bereich eine oder mehrere Duchlassöffnungen (44) aufweist.

10. Erntebergungsvorrichtung (2) nach einem der vorhergehenden Ansprüche, **dadurch gekennzeichnet, dass** im Bereich der Überlauföffnung (32) eine schwenkbeweglich gelagerte Drosselklappe (46) angeordnet ist, die die Überlauföffnung (32) durchgreift und die von dem durch die Überlauföffnung (32) strömenden Hydrauliköl beweglich gehalten ist.

11. Erntebergungsvorrichtung (2) nach Anspruch 10, **dadurch gekennzeichnet, dass** die Schwenkbeweglichkeit der Drosselklappe (46) in zumindest eine Schwenkrichtung durch einen Anschlag (52) begrenzt ist.

12. Erntebergungsvorrichtung (2) nach Anspruch 10 oder 11, **dadurch gekennzeichnet, dass** die bewegliche Drosselklappe (46) das Hydrauliköl in beiden möglichen Fließrichtungen drosselt.

13. Erntebergungsvorrichtung (2) nach einem der vorhergehenden Ansprüche, **dadurch gekennzeichnet, dass** der Vorratstank (16) mit einem Schnüffelventil (48) verbunden ist, das Luft in den Vorratstank (16) strömen lässt, wenn der im Vorratstank (16) herrschende Druck einen Schwellwert unterschreitet.

14. Erntebergungsvorrichtung (2) nach einem der vorhergehenden Ansprüche, **dadurch gekennzeichnet, dass** der Vorratstank (16) mit einem Entlüftungsventil (50) verbunden ist, das öffnet, wenn der im Vorratstank (16) herrschende Druck einen Schwellwert überschreitet.

15. Erntebergungsvorrichtung (2) nach einem der vorhergehenden Ansprüche, **dadurch gekennzeichnet, dass** das Strukturelement (8) des Rahmens (10) über die Längserstreckungsrichtung (36) des fluiddicht ausgestalteten Vorratstanks (16) hinweg zwei C-Profile (20) aufweist, die den Vorratstank (16) in Längserstreckungsrichtung (36) begrenzen und mit ihren offenen Längsseiten einander zugewandt angeordnet über ihre Länge im Anstoßbereich miteinander verschweißt sind, wobei die Trennwand (22) zwischen die Schenkel der einander zugewandten C-Profile (20) gelegt und mit diesen verschweißt ist.

16. Erntebergungsvorrichtung (2) nach einem der vorhergehenden Ansprüche, **dadurch gekennzeichnet, dass** es sich bei der Erntebergungsvorrichtung (2) um eine mehrteilige Maschine mit mindestens einem Mittelrahmen (4) und zwei seitlich dazu angeordneten und schwenkbeweglich mit dem Mittelrahmen (4) verbundenen Anbaurahmen (6) handelt, wobei das Strukturelement (8) das mittige Querprofil (12) des Mittelrahmens (4) ist.
